# EUROPÄISCHE PATENTSCHRIFT

(11) **EP 0 622 345 B1**
(45) Veröffentlichungstag und Bekanntmachung des Hinweises auf die Patenterteilung: **14.08.1996**
(21) Anmeldenummer: 94105016.3
(22) Anmeldetag: 30.03.1994
(51) Int. Cl.: C04B 28/02, E21F 15/00

(54) **Spritzbeton und ein Verfahren zu seiner Herstellung**
Sprayable concrete and method of producing it
Béton projeté et méthode pour sa production

(30) Priorität: 27.04.1993 DE 4313770
(43) Veröffentlichungstag der Anmeldung: 02.11.1994
(73) Patentinhaber: Degussa Aktiengesellschaft, D-60311 Frankfurt (DE); WOERMANN GmbH & Co. KG, D-64295 Darmstadt (DE)
(72) Erfinder: Barthel, Walter, D-63505 Langenselbold (DE); Sutej, Branimir, D-89522 Heidenheim (DE); Eichler, Klaus, D-71131 Jettingen (DE); Wagner, Jörg-Peter, D-64739 Höchst (Odw.) (DE); Hauck, Hans Günter, D-65187 Wiesbaden (DE)
(74) Vertreter: Weber, Wolfgang

(56) Entgegenhaltungen:
- EP-A- 0 492 146
- EP-A- 0 506 421
- DE-A- 4 027 332
- GB-A- 2 241 499

## Beschreibung

Die Erfindung betrifft einen Spritzbeton und das Verfahren zu seiner Herstellung.

Es ist bekannt, Spritzbeton unter anderem bei dem Bau von Tunneln einzusetzen. Zur Verhinderung von Gebirgsauflockerungen und zur Sicherung der Vortriebsmannschaft muß unmittelbar nach jedem Abschlag eine circa 15 bis 25 cm dicke Spritzbeton-Außenschale eingebaut werden. Dabei wird vom Spritzbeton verlangt, daß er rasch erstarrt und seine Festigkeit schnell entwickelt. Nach einer Stunde soll die Druckfestigkeit mindestens 1 N/mm², nach einem Tag mindestens 10 N/mm² erreichen. Dies ist bekanntermaßen nur durch die Zugabe von Beschleunigern möglich.

In Bereichen mit Bergwasser steht die Spritzbeton-Außenschale über die gesamte Abwicklung der Röhre mit diesem in Kontakt. Bei großen Tunneldurchmessern, wie zum Beispiel für Autobahnen oder DB-Neubaustrecken, mit Abwicklungslängen von 25 bis 30 m ergeben sich große Berührungsflächen. Je nach Art und Menge des anstehenden Bergwassers können dadurch Bestandteile aus dem Spritzbeton ausgelaugt werden. Obwohl die Auslaugtiefe meist sehr klein ist, können wegen der großen Berührungsflächen erhebliche Stoffmengen abtransportiert werden.

Wenn der Tunnel ringsum abgedichtet ist und dadurch kein Bergwasser mit ausgelaugten Bestandteilen von dort abgeführt wird, treten meist keine Probleme auf, weil sich in dem angesammelten Bergwasser rund um die Röhre ein Sättigungszustand einstellt. Schwieriger ist es, wenn in Tunneln mit hoher Gebirgsüberdeckung die Tunnelröhre wegen des sonst entstehenden großen Wasserdrucks nicht ringsum abgedichtet werden kann. In derartigen Tunneln wird das Bergwasser über Drainagen in den Vorfluter abgeleitet. Dies hat zur Folge, daß sich in dem umgebenden Bergwasser kein Sättigungszustand einstellt, sondern vielmehr ständig neues, noch aufnahmefähiges Wasser an den Spritzbeton herangeführt wird. Die dadurch hervorgerufene ständige Auslaugung des Spritzbetons kann zu folgenden Problemen führen:
- Die gelösten Stoffe können in den Drainagen ausfallen. Um ein mögliches Verstopfen der Leitungen und damit ein Ansteigen des Bergwasserdruckes zu vermeiden, sind aufwendige Reinigungsarbeiten notwendig.
- Dem Vorfluter wird Wasser mit einem hohem pH-Wert zugeführt werden.
- Die Spritzbeton-Außenschale kann örtlich beschädigt werden.

Um dies weitestgehend zu vermeiden, werden bekanntermaßen besondere Maßnahmen durchgeführt. So wird durch Abschlauchung mit Kunststoffrohren zumindest ein Teil des anfallenden Bergwassers direkt in die Drainagen abgeleitet, ohne vorher mit dem Spritzbeton in Berührung zu kommen. Dieses Wasser spült gleichzeitig bei entsprechender Menge die Drainagen.

Weiterhin wird durch eine entsprechende Auswahl der Betonausgangsstoffe und eine Optimierung der Zusammensetzung des Betons ein dichteres Mikrogefüge erreicht und der Anteil an löslichen Bestandteilen vermindert. Diese Verminderung, beispielsweise der Menge an alkalischem Beschleuniger, findet jedoch seine Grenzen in der Verarbeitbarkeit (Spritzbarkeit) und der ausreichend raschen Festigkeitsentwicklung des Spritzbetons, sodaß nachteiligerweise bekanntermaßen ein völliger Verzicht auf den Zusatz eines alkalischen Beschleunigers ohne Beeinträchtigung der für Spritzbeton geforderten Frühfestigkeit nicht möglich ist. Hierzu müßten aber erst besondere Zemente entwickelt werden (R. Breitenbücher et al. in Betoninformation 1/92, Seiten 10 bis 15)

Es ist bekannt, den Eluierwiderstand von Spritzbeton zu erhöhen, indem man die Zusammensetzung wie folgt festlegt:
- Anstelle von Kalksteinsplitt wird Basaltsplitt verwendet.
- Anstelle von 380 kg/m³ PZ 35 F werden 340 kg/m³ HOZ 35 L mit 50 % Hüttensand verwendet. Gleichzeitig wird Silicasuspension (Flugasche oder Silicastaub) mit einem Feststoffgehalt von 25 kg je m³ Beton zugegeben.
- Anstelle der Zugabe von 5 bis 8 % pulverförmigem Beschleuniger wird flüssiger Beschleuniger verwendet. Der Wirkstoffanteil der Zugabemenge beträgt nur noch maximal 3 % des Zementgehaltes.

(R. Breitenbücher et al. in Betoninformation 1/92, Seiten 10 bis 15).

Es ist bekannt, bei der Herstellung von Spritzbeton anstelle von Silicafume oder Flugasche ein flüssiges Zusatzmittel auf Basis von Kieselsol einzusetzen. Hierdurch wird zwar der Rückprall beim Verspritzen reduziert, jedoch ist es notwendig, um eine ausreichende Frühfestigkeit des Spritzbetons zu erreichen, zusätzlich einen Abbindebeschleuniger einzusetzen (Prospekt SIKATELL von SIKA Plastiment GmbH 12/92). Hierdurch ist der Nachteil der leichten Auslaugbarkeit des Spritzbetons noch nicht behoben.

Es besteht somit die Aufgabe, die Auslaugbarkeit von Spritzbeton in Tunnel-Außenschalen und damit die Ausfällung in den Drainagen und eine hohe Alkalität der in die Vorfluter eingeleiteten Wässer erheblich zu verringern. Der Spritzbeton muß so optimiert werden, daß
- der Anteil der leicht löslichen Alkaliverbindungen reduziert,
- der Gehalt an auslaugbarem und ausfällbarem Ca(OH)₂ verringert und
- ein möglichst dichtes Mikrogefüge erreicht wird.

Gegenstand der Erfindung ist ein Spritzbeton, verarbeitbar mit einem bekannten Trockenspritzverfahren, wobei man neben bekannten Zuschlagstoffen und Wasser als Zement einen Zement mit einem Gehalt an Calciumsulfat von 0,04 bis 2 Gew.-%, berechnet als SO₃ und/oder einen Gehalt an Alkalisulfat, berechnet als SO₃, im Bereich von 0,3 bis 2,6 Gew.-% für Kaliumsulfat und im Bereich von 0,05 bis 2,8 Gew.-% für Natriumsulfat verwendet und dem Anmachwasser eine sich nicht entmischende, niederviskose Flüssigkeit von amorphem Siliciumdioxid in kolloidaler Teilchengröße zusetzt und dabei auf den Zusatz von Abbindebeschleunigern verzichtet.

Ein weiterer Gegenstand der Erfindung ist ein Verfahren zur Herstellung von Spritzbeton, welches dadurch gekennzeichnet ist, daß man ein bekanntes Trockenspritzverfahren durchführt und dabei neben bekannten Zuschlagstoffen und Wasser als Zement einen Zement mit einem Gehalt an Calciumsulfat von 0,04 bis 2 Gew.-%, berechnet als SO₃ und/oder einen Gehalt an Alkalisulfat, berechnet als SO₃, im Bereich von 0,3 bis 2,6 Gew.-% für Kaliumsulfat, und im Bereich von 0,05 bis 2,8 Gew.-% für Natriumsulfat verwendet und dem Anmachwasser eine sich nicht entmischende, niederviskose Flüssigkeit von amorphem Siliciumdioxid in kolloidaler Teilchengröße zusetzt und dabei auf den Zusatz von Abbindebeschleunigern verzichtet.

Die niederviskose Flüssigkeit kann ein Kieselsol sein. Insbesondere kann die niederviskose Flüssigkeit ein Kieselsol mit den folgenden physikalischen Kenndaten sein:

| | |
|---|---|
| Weiße, milchige Flüssigkeit Dichte (bei 20 °C): | 1,30 g/ml |
| pH-Wert: | 9 - 10 |
| Chloridgehalt: | < 0,1 Gew.-% |

Der erfindungsgemäß einzusetzende Zement wird beschrieben in dem Dokument DE-A 40 27 332 (Anmelderin: E. Schwenk Zementwerke KG). Er ist im Moment unter der Bezeichnung 45 S im Handel erhältlich.

Als Zuschlagstoff können alle bekannten Zuschlagstoffe der DIN 4226, wie zum Beispiel Kalksteinsplitt, Rundkorn u. a., eingesetzt werden.

Als Zusatzstoffe können alle bekannten Zusatzstoffe, wie zum Beispiel Trassmehl, Flugaschen, Hochofenschlacke, Gesteinsmehle u. a., eingesetzt werden.

Das Mischungsverhältnis von niederviskoser Flüssigkeit von amorphem Siliciumdioxid in kolloidaler Teilchengröße, insbesondere von Kieselsol, zu Zement kann 0,5 bis 5,0 Gew.-%, vorzugsweise 1,5 bis 2,5 Gew.-%, bezogen auf die Zementmenge, betragen.

Der erfindungsgemäße Spritzbeton weist vorteilhafterweise nach 28 Tagen eine hohe Druckfestigkeit auf.

Die Frühdruckfestigkeit erreicht bereits nach sehr kurzer Zeit den maximalen Wert. Die Wassereindringtiefe ist sehr gering. Die Werte für die Eluate von Calcium, Aluminium und Natrium sind sehr niedrig. In dieser Kombination erfüllt der erfindungsgemäße Spritzbeton die an ihn gestellten Anforderungen im Zusammenhang mit dem Tunnelbau auch ohne den unerwünschten Zusatz an Beschleuniger. Überraschenderweise kann bei dem erfindungsgemäßen Spritzbeton das Calciumeluat deutlich gesenkt und dennoch eine sehr schnelle Frühdruckfestigkeit erreicht werden.

### Beispiele

Es werden Kalksplittbetone 0/8 mit 350 kg/m³ Zement hergestellt. Dabei haben die gegebenen Abkürzungen die folgenden Bedeutungen:

### Si:

Kieselsol mit den folgenden physikalisch-chemischen Kenndaten:

| | |
|---|---|
| Weiße, milchige Flüssigkeit Dichte (bei 20 °C): | 1,30 g/ml |
| pH-Wert: | 9 - 10 |
| Chloridgehalt: | < 0,1 Gew.-% |

### 45 S:

Zement mit einem SO₃-Gehalt von 1 Gew.-%.

### 45 F/S:

Zement der Güte 45 nach DIN 1164 mit einem speziellen Sulfatträger. Dieser Zement ist ein Normenzement.

### BE:

Betonbeschleuniger auf Basis Natriumaluminat (flüssig). Die Zugabemenge beträgt 5 Gew.-%, bezogen auf den Zementgehalt.

### 45 S mod.:

- Bestandteile:: 70 % Zement 45 S
30 % Hochofenschlacke

### 45 F:

Zement der Güte 45 nach DIN 1164.

Diese Stoffe werden in den folgenden Kombinationen eingesetzt, wobei ein Beschleuniger nur dann auch verwendet wird, wenn die Anmerkung BE angegeben wird.

Fehlt diese Anmerkung, dann enthält der Spritzbeton keinen Beschleuniger.
45 S + Si
45 S
45 F/S + BE
45 F + BE
45 S mod.
45 S mod. + Si

Unter Verwendung dieser Stoffe werden im Trockenspritzverfahren Betonblöcke (Spritzkisten) der Abmessungen 80 cm x 60 cm x 15 cm hergestellt. An diesen Betonblöcken werden unter Anwendung der folgenden Meßmethoden Untersuchungen durchgeführt:
1. Festbetonrohdichte nach DIN 1048
2. Wassereindringtiefe an Bohrkernen nach DIN 1048
3. Druckfestigkeit mittels Bohrkernen nach DIN 1048
4. Frühdruckfestigkeit mittels Penetrationsnadel. Die Penetrationsnadel wird unter dem Handelsnamen Meyco® Kaindl von Meynadier AG, CH-8404 Winterthur, vertrieben. Bei dieser Meßmethode wird eine Nadel mit definierten Abmessungen, mit einer definierten Kraft und einem definierten Weg in den jungen Beton gedrückt. Von der gemessenen Widerstandskraft wird dann die Frühdruckfestigkeit ermittelt.
5. K-Eluat, Na-Eluat, Ca-Eluat nach Breitenbücher. Für den Auslaugversuch wird ein Prüfrahmen mit einer Prüffläche von 50 x 70 cm² verwendet.
   Der Prüfrahmen ist an der Rückseite mit einer 10 mm dicken Kunststoffplatte (Rückwand) wasserdicht abgeschlossen. Zur Sicherstellung eines 3 mm breiten Spaltes, in den später Wasser eingefüllt wird, wird vorab eine 3 mm dicke Kunststoffplatte eingeführt.
   Der zu untersuchende Beton wird direkt in diesen Prüfrahmen gespritzt, wobei die Dicke des Spritzbetons rund 50 mm beträgt. Sobald der Beton erstarrt, wird die Zwischenplatte gezogen und sofort destilliertes Wasser in den Prüfraum eingefüllt, so daß der Beton an seiner Rückseite ausgelaugt wird. Durch eine besondere Dosiervorrichtung wird dann über 28 Tage von oben kontinuierlich destilliertes Wasser mit einer Durchflußrate von rund 300 ml/h zugeführt. Im gleichen Maß wird im unteren Teil des Prüfraumes mit ausgelaugten Stoffen angereichertes Wasser abgezogen.
   Nach 1 Stunde, 6 Stunden, 1 Tag, 7 und 28 Tagen werden Eluatproben aus dem abgezogenen Wasser entnommen. An diesen Proben werden der pH-Wert und die Calcium-, Natrium und Kaliumionenkonzentration bestimmt.
   Der Versuch wird im Klimaraum bei 20 °C und 65 % relativer Feuchte durchgeführt.
6. K-Eluat, Na-Eluat, Ca-Eluat nach Springenschmid, publiziert in Beton-Informationen 1/92, Seiten 10 bis 15.
7. Na-Eluat, Al-Eluat, Ca-Eluat nach ÖNORM S 2072
8. Elektrische Leitfähigkeit nach ÖNORM S 2072
9. Alkalität nach ÖNORM S 2072

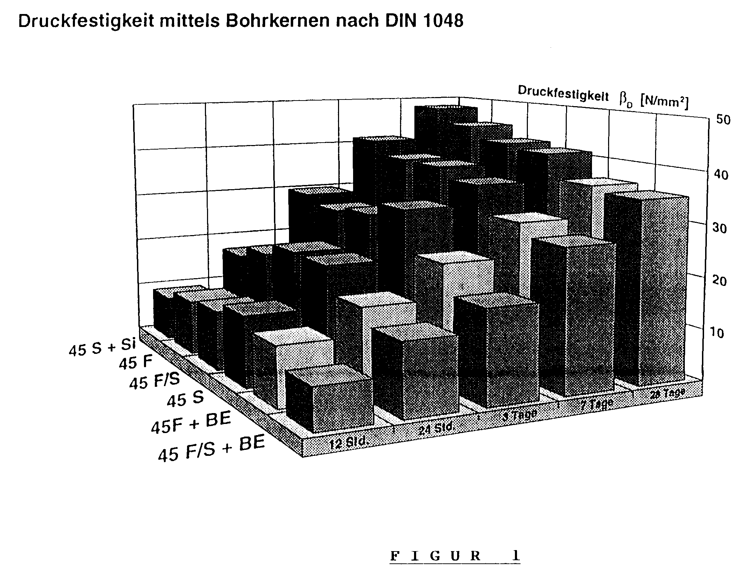

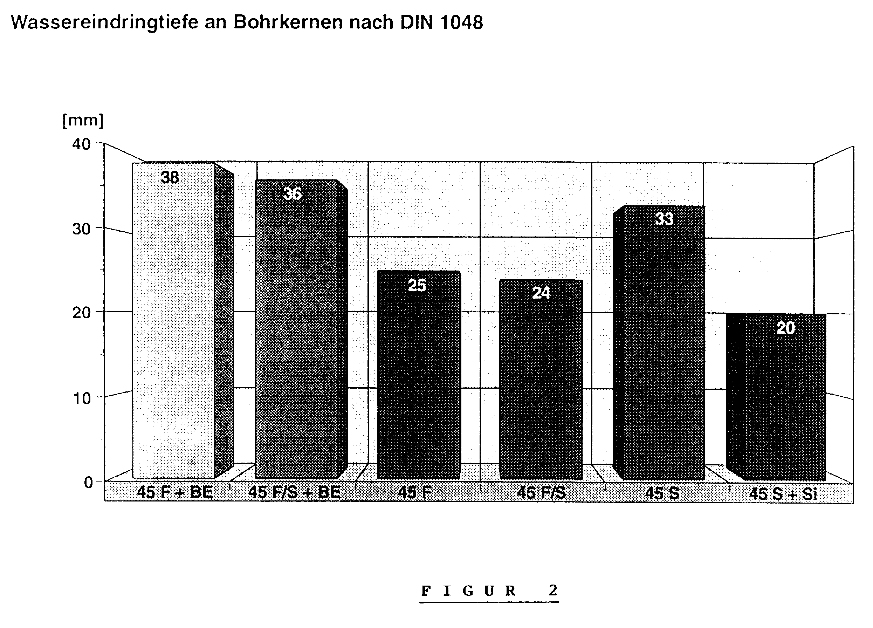

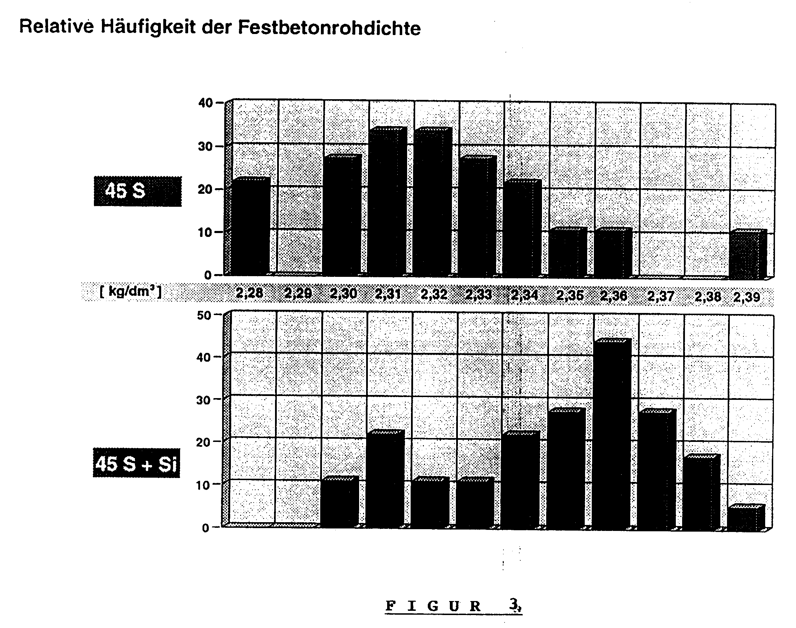

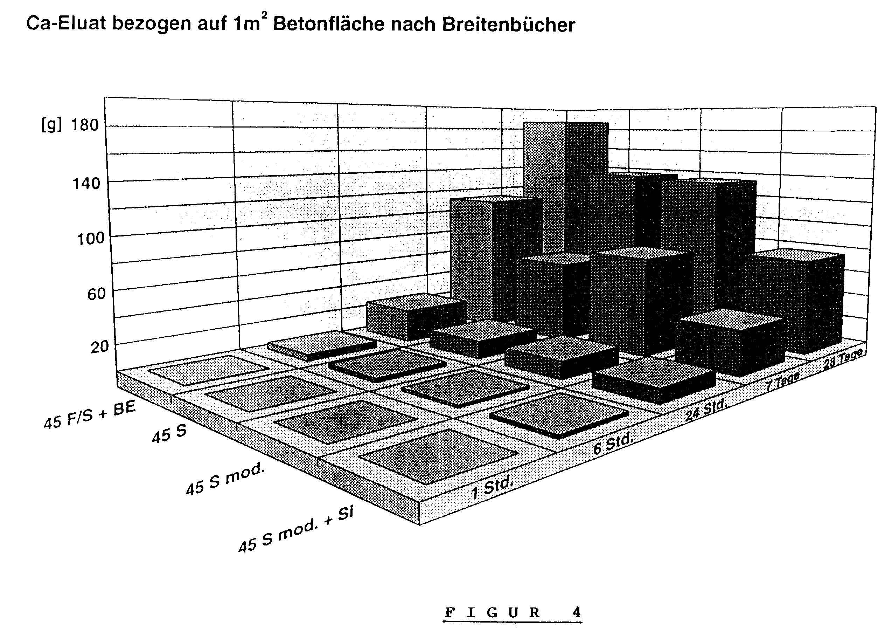

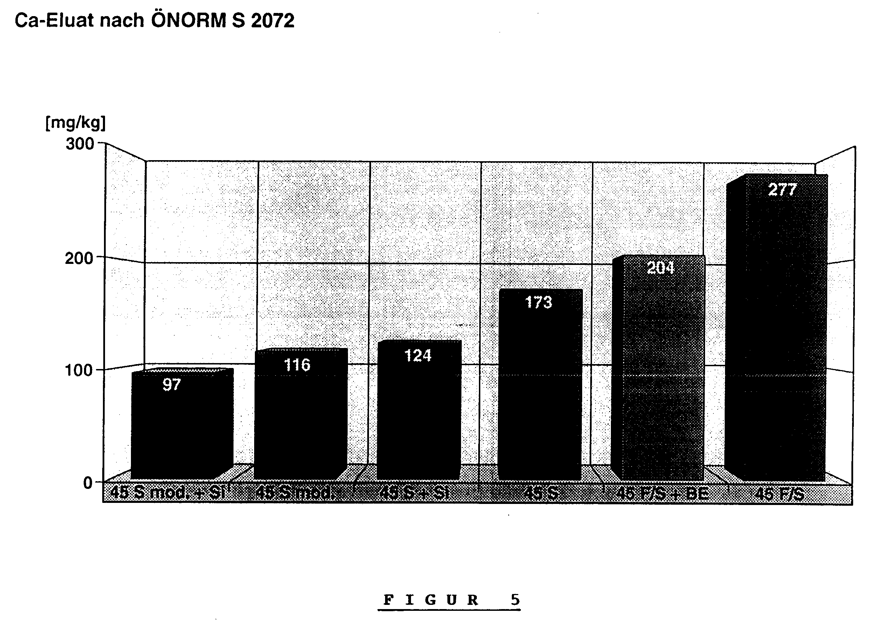

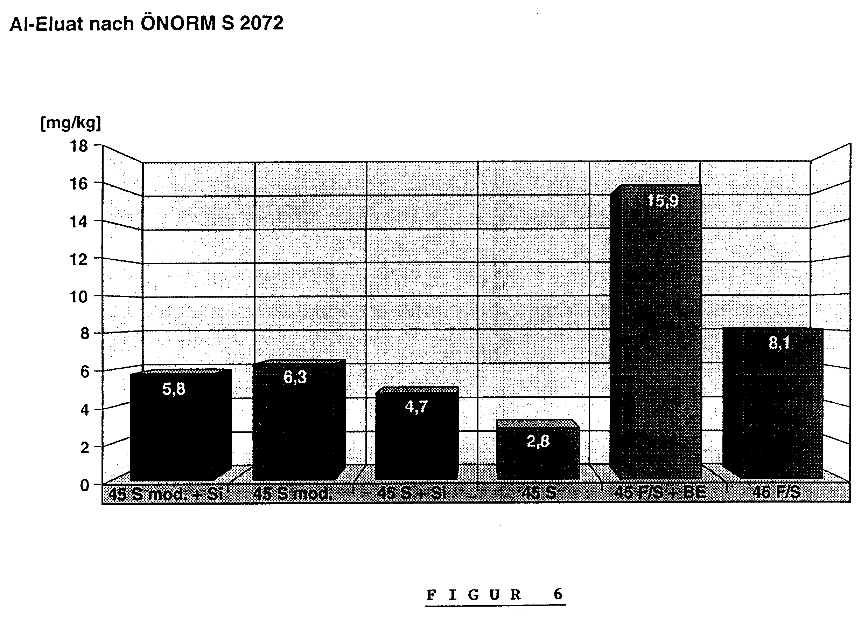

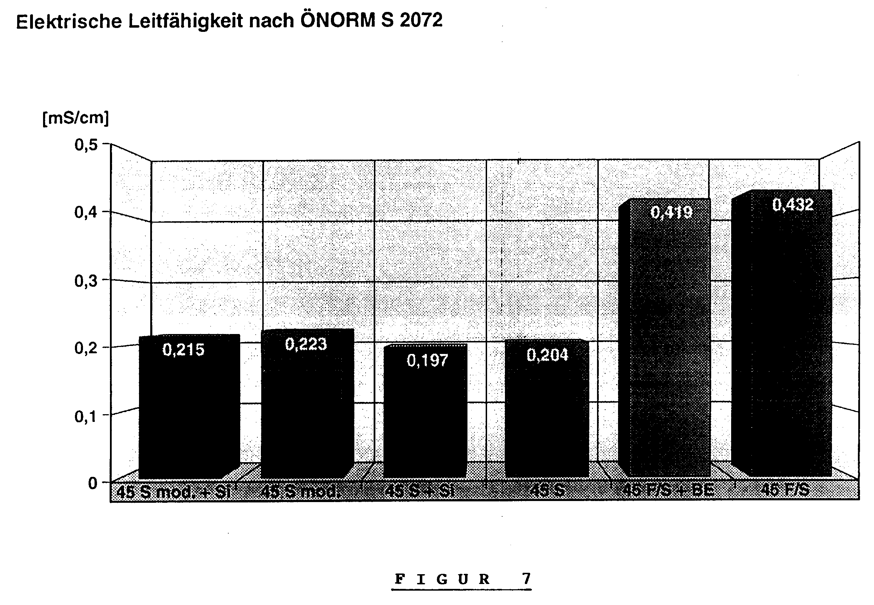

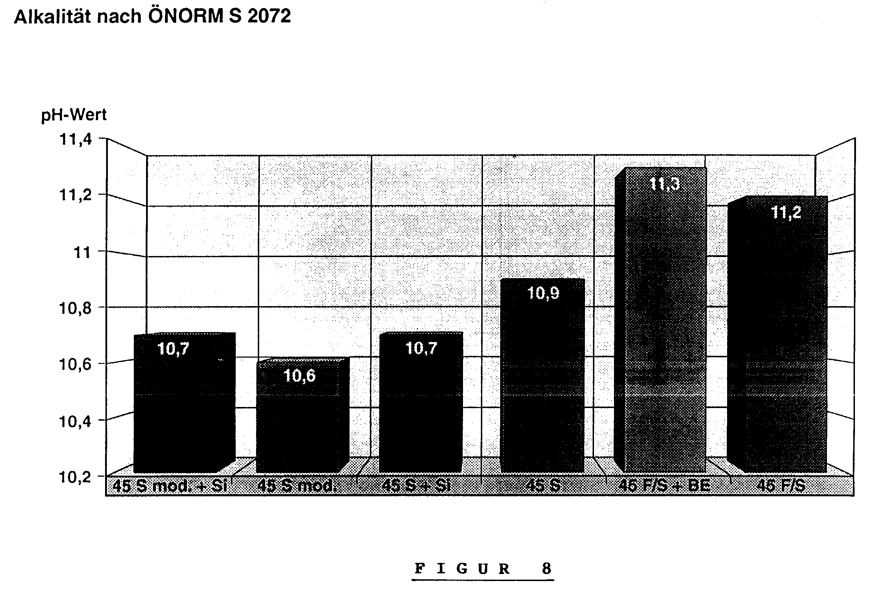

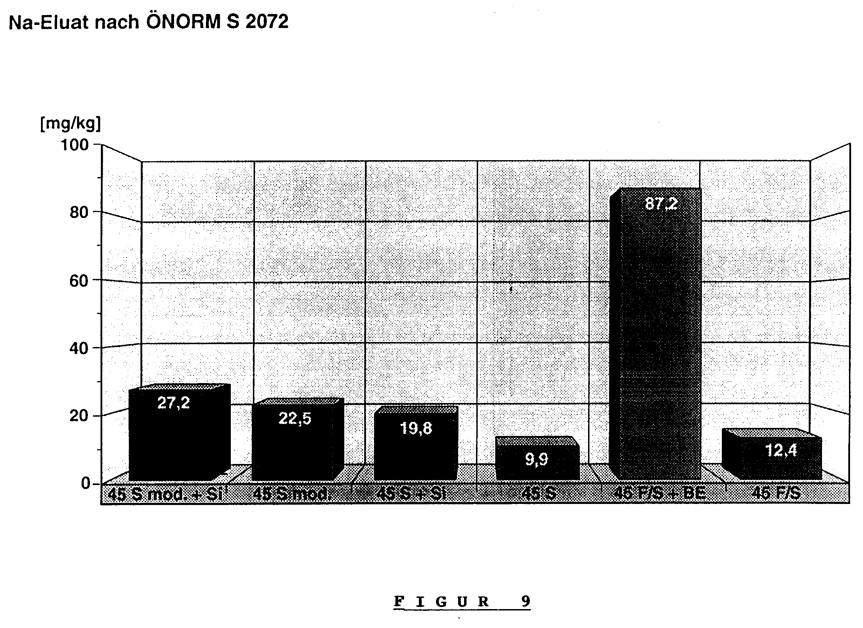

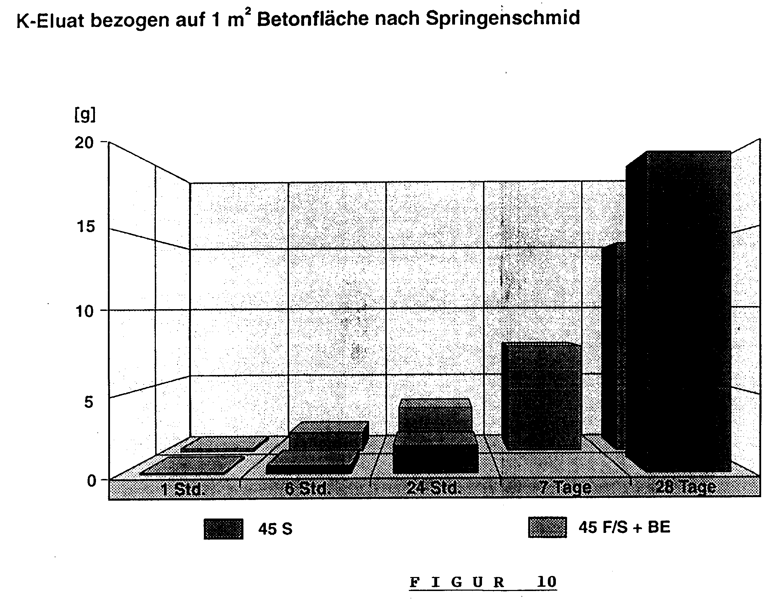

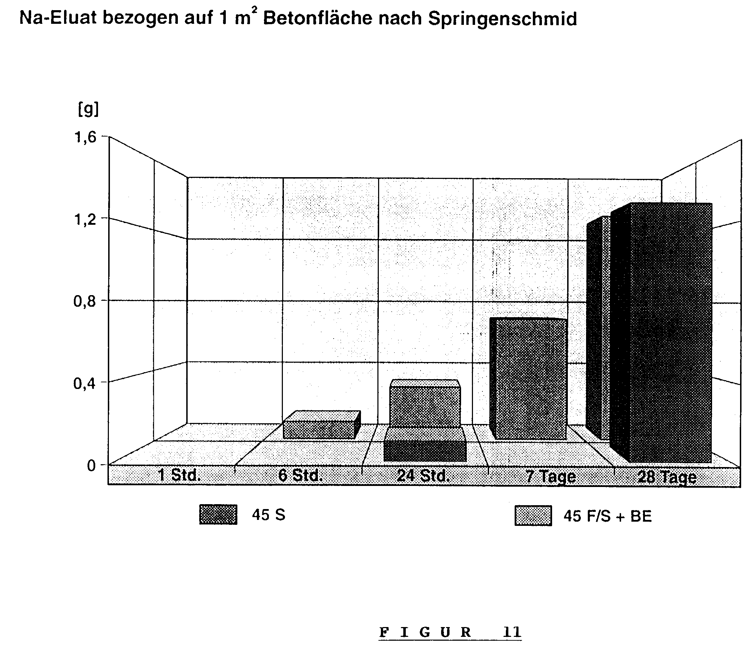

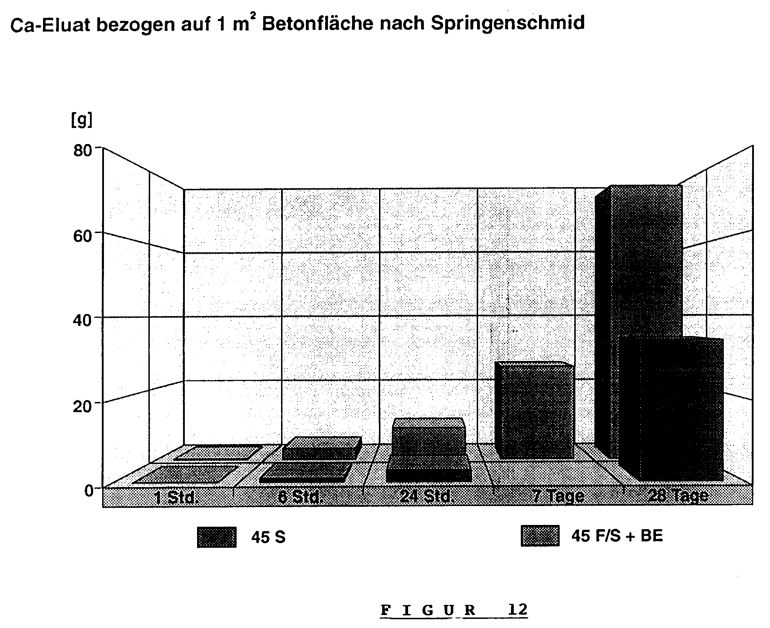

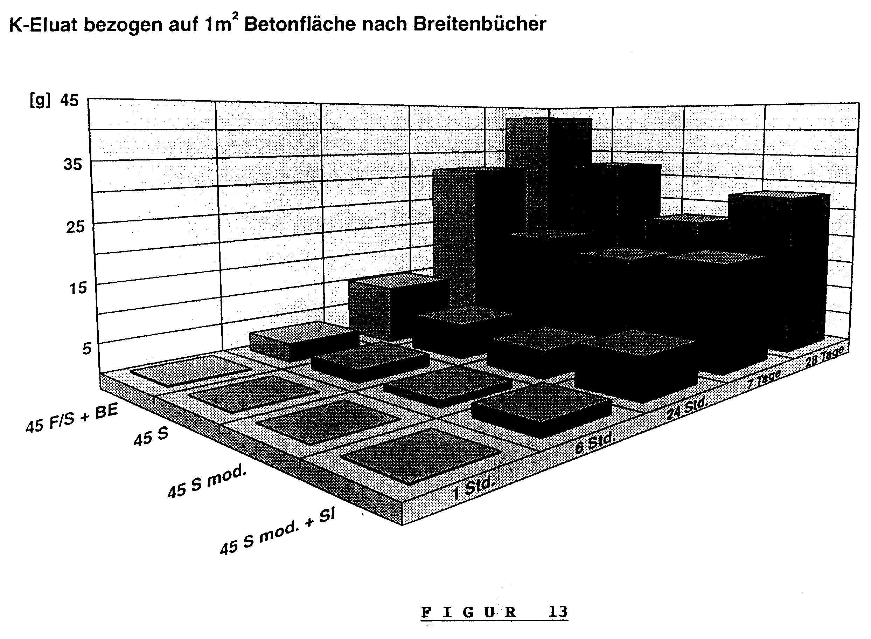

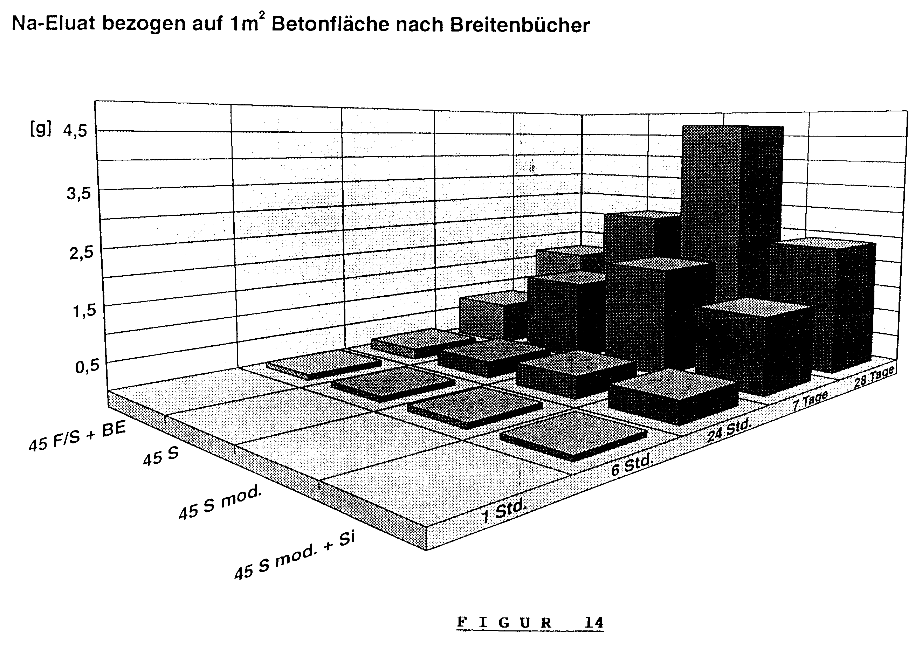

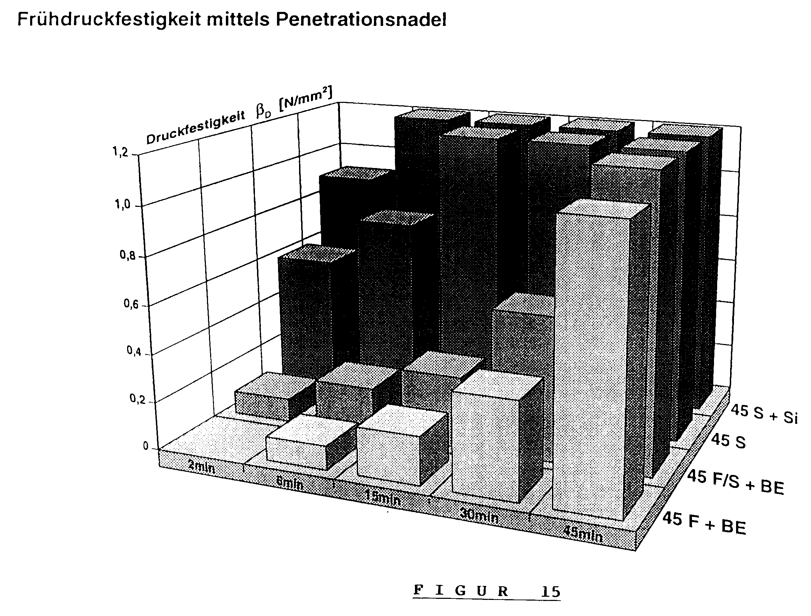

Es zeigen die Figuren 1 bis 15 die Ergebnisse der einzelnen Untersuchungsmethoden.

Figur 1 zeigt die Druckfestigkeit mittels Bohrkernen nach DIN 1048. Der erfindungsgemäß hergestellte Spritzbeton (45 S + Si) weist nach 28 Tagen die höchste Druckfestigkeit auf.

Figur 2 zeigt die Wassereindringtiefe an Bohrkernen nach DIN 1048. Der erfindungsgemäß hergestellte Spritzbeton weist die niedrigste Wassereindringtiefe auf.

Figur 3 zeigt die relative Häufigkeit der Festbetonrohdichte. Bei dem erfindungsgemäß hergestellten Spritzbeton liegt die häufigste Festbetonrohdichte bei 2,36 kg/dm³. Dies bedeutet, daß durch den Zusatz von Kieselsol zu den erfindungsgemäß eingesetzten Zement eine höhere Dichte erzielt wird.

Figur 4 zeigt das Ca-Eluat, bezogen auf 1 m² Betonfläche nach Breitenbücher. Der erfindungsgemäß eingesetzte Zement weist nach 28 Tagen ein niedrigeres Ca-Eluat im Vergleich zur Verwendung eines Beschleunigers auf.

Figur 5 zeigt das Ca-Eluat nach ÖNORM S 2072. Der erfindungsgemäß hergestellte Spritzbeton weist ein sehr niedriges Ca-Eluat auf.

Figur 6 zeigt das Al-Eluat nach ÖNROM S 2072. Der erfindungsgemäß hergestellte Spritzbeton weist ein sehr niedriges Al-Eluat auf.

Figur 7 zeigt die elektrische Leitfähigkeit nach ÖNORM S 2072. Der erfindungsgemäß hergestellte Spritzbeton weist die niedrige elektrische Leitfähigkeit auf.

Figur 8 zeigt die Alkalität nach ÖNORM S 2072. Der erfindungsgemäß hergestellte Spritzbeton weist eine niedrige Alkalität auf.

Figur 9 zeigt das Na-Eluat nach ÖNORM S 2072. Der erfindungsgemäß hergestellte Spritzbeon weist ein sehr niedriges Na-Eluat auf.

Figur 10 zeigt das K-Eluat, bezogen auf 1 m² Betonfläche, nach Springenschmid.

Figur 11 zeigt das Na-Eluat, bezogen auf 1 m² Betonfläche, nach Springenschmid.

Figur 12 zeigt das Ca-Eluat, bezogen auf 1 m² Betonfläche, nach Springenschmid.

Figur 13 zeigt das K-Eluat, bezogen auf 1 m² Betonfläche, nach Breitenbücher.

Figur 14 zeigt das Na-Eluat, bezogen auf 1 m² Betonfläche nach Breitenbücher.

Figur 15 zeigt die Frühdruckfestigkeit mittels Penetrationsnadel. Der erfindungsgemäß hergestellte Spritzbeton weist bereits nach 6 Minuten die maximale Frühdruckfestigkeit auf.

Zusammenfassend kann festgestellt werden, daß der erfindungsgemäß hergestellte Spritzbeton die höchste Druckfestigkeit nach 28 Tagen, die schnellste Bildung der Frühdruckfestigkeit, die geringste Wassereindringtiefe, ein sehr niedriges Ca-Eluat, ein sehr niedriges Al-Eluat, eine sehr niedrige Leitfähigkeit, eine sehr niedrige Alkalität und ein sehr niedriges Na-Eluat aufweist.

## Patentansprüche

1. Spritzbeton, verarbeitbar mit einem bekannten Trockenspritzverfahren, wobei man neben bekannten Zuschlagstoffen und Wasser als Zement einen Zement mit einem Gehalt an Calciumsulfat von 0,04 bis 2 Gew.-%, berechnet als SO₃ und/oder einen Gehalt an Alkalisulfat, berechnet als SO₃, im Bereich von 0,3 bis 2,6 Gew.-% für Kaliumsulfat, und im Bereich von 0,05 bis 2,8 Gew.-% für Natriumsulfat verwendet und dem Anmachwasser eine sich nicht entmischende, niederviskose Flüssigkeit von amorphem Siliciumdioxid in kolloidaler Teilchengröße zusetzt und dabei auf den Zusatz von Abbindebeschleunigern verzichtet.

2. Verfahren zur Herstellung von Spritzbeton nach Anspruch 1, dadurch gekennzeichnet, daß man ein bekanntes Trockenspritzverfahren durchführt und dabei neben bekannten Zuschlagstoffen und Wasser als Zement einen Zement mit einem Gehalt an Calciumsulfat von 0,04 bis 2 Gew.-%, berechnet als SO₃ und/oder einen Gehalt an Alkalisulfat, berechnet als SO₃, im Bereich von 0,3 bis 2,6 Gew.-% für Kaliumsulfat, und im Bereich von 0,05 bis 2,8 Gew.-% für Natriumsulfat verwendet und dem Anmachwasser eine sich nicht entmischende, niederviskose Flüssigkeit von amorphem Siliciumdioxid in kolloidaler Teilchengröße zusetzt und dabei auf den Zusatz von Abbindebeschleunigern verzichtet.

## Claims

1. Sprayed concrete, processable by a known dry spraying process, wherein in addition to known additives and water the cement used is a cement having a calcium sulphate content of from 0.04 to 2 wt.%, calculated as SO₃ and/or an alkali sulphate content, calculated as SO₃, in the range of from 0.3 to 2.6 wt.% for potassium sulphate and in the range of from 0.05 to 2.8 wt.% for sodium sulphate, and a low-viscosity liquid, which does not demix, of amorphous silicon dioxide of colloidal particle size, is added to the mixing water and the addition of setting accelerators is dispensed with.

2. Process for the production of sprayed concrete according to claim 1, characterised in that a known dry spraying process is carried out and in the course of this in addition to known additives and water the cement used is a cement having a calcium sulphate content of from 0.04 to 2 wt.%, calculated as SO₃ and/or an alkali sulphate content, calculated as SO₃, in the range of from 0.3 to 2.6 wt.% for potassium sulphate and in the range of from 0.05 to 2.8 wt.% for sodium sulphate, and wherein a low-viscosity liquid, which does not demix, of amorphous silicon dioxide of colloidal particle size, is added to the mixing water and the addition of setting accelerators is dispensed with.

## Revendications

1. Béton projeté, susceptible d'être appliqué par un procédé de projection à sec connu, dans lequel on utilise, outre des agrégats connus et de l'eau, comme ciment un ciment présentant une teneur en sulfate de calcium de 0,04 à 2 % en poids, calculée en tant que SO₃, et/ou une teneur en sulfate alcalin, calculée en tant que SO₃, dans la plage de 0,3 à 2,6 % en poids pour le sulfate de potassium et dans la plage de 0,05 à 2,8 % en poids pour le sulfate de sodium, on ajoute à l'eau de délayage un liquide faiblement visqueux, qui ne se dissocie pas, de dioxyde de silicium amorphe en particules de taille colloïdale et on supprime l'addition d'accélérateurs de prise.

2. Procédé de préparation de béton projeté selon la revendication 1, caractérisé en ce qu'on réalise un procédé de projection à sec connu et on y utilise, outre des agrégats connus et de l'eau, comme ciment un ciment présentant une teneur en sulfate de calcium de 0,04 à 2 % en poids, calculée en tant que SO₃, et/ou une teneur en sulfate alcalin, calculée en tant que SO₃, dans la plage de 0,3 à 2,6 % en poids pour le sulfate de potassium et dans la plage de 0,05 à 2,8 % en poids pour le sulfate de sodium, on ajoute à l'eau de délayage un liquide faiblement visqueux, qui ne se dissocie pas, de dioxyde de silicium amorphe en particules de taille colloïdale et on supprime l'addition d'accélérateurs de prise.
